# EUROPEAN PATENT SPECIFICATION

(11) **EP 2 512 947 B1**
(45) Date of publication and mention of the grant of the patent: **08.04.2015**
(21) Application number: 10777017.4
(22) Date of filing: 16.11.2010
(51) Int. Cl.: B65D 41/26, B65D 47/04, B65D 47/08, G01F 11/28

(54) **MEASURED DOSING CAP ASSEMBLY**
Kappenanordnung für Messdosierungen
Ensemble de bouchon de dosage mesuré

(30) Priority: 14.12.2009 EP 09179011
(43) Date of publication of application: 24.10.2012
(73) Proprietor: Unilever PLC, London Greater London EC4Y 0DY (GB); Unilever N.V., 3013 AL Rotterdam (NL)
(72) Inventor: WILLIAMS, Glen, Wirral, Merseyside CH63 3JW (GB)
(74) Representative: Hardy, Susan Margaret
(86) International application number: PCT/EP2010/067549
(87) International publication number: WO 2011/072968

(56) References cited:
- EP-A1- 0 331 589
- WO-A1-96/03625
- US-A- 5 330 081
- US-A1- 2008 308 183

## Description

The present invention relates to a measured-dosing system for fluids in particular laundry liquids.

In the use of certain liquid products such as laundry liquids it is necessary to measure out a particular amount for use at any one time. This is more important with concentrated fluids as over-dosing or under-dosing is easier to effect with a concentrated fluid. An example of a measured-dosing system is disclosed in US 5330081.

The object of the present invention is to provide an improved measured-dosing system for laundry fluids.

Accordingly in a first aspect the invention provides a measured dosing cap assembly suitable for use with a squeeze-operated container comprising a storage chamber containing a fluid, the measured dosing cap assembly comprising:
(a) a measuring chamber defined by a base and circumferential wall
(b) a feed spout which extends upwardly from a base of the measuring chamber;
(c) a deflector which extends from at least one position on the periphery of the measuring chamber to overlie the top of the feedspout with a gap defined therebetween, such that the fluid can exit the feedspout laterally via said gap characterised in that the assembly includes a foldable pour spout.

In a second aspect the invention provides a squeeze-operated container according to claim 7.

With this arrangement when the fluid is forced into the measuring chamber by squeezing the storage chamber, the deflector cap prevents or reduces vertical spray of the fluid which can be occasioned by excessive force applied to the storage chamber. This is especially useful with laundry liquids, where vertical spray would be highly undesirable.

The fluid communication of measuring chamber and storage chamber may be effected by a dip tube connected with feedspout and extending into the storage chamber.

Preferably the measured dosing cap assembly includes a lid which extends pivotally from the circumferential wall of the measuring chamber by e.g. a living hinge and is pivotable between an open and closed position. The lid preferably comprises a planar body portion which in the closed position overlies the measuring chamber. Preferably the lid includes an elongate sealing member preferably extending from the planar body portion which, in the closed position, abuts the deflector to sealingly force this against the feed spout and close the gap. Preferably the deflector is resilient such that removal of the sealing force allows the deflector to move away from the feed spout opening up the gap again.

The deflector preferably comprises a planar portion. Preferably the deflector comprises a depending skirt which extends downwardly in the direction and preferably overlaps with the feed spout. Preferably this skirt extends at least partially around the circumference of the planar body. With this arrangement the deflector forms a form of canopy to force the fluid exiting the gap downward which is even more advantageous.

Preferably the deflector is has a generally circular planar portion.

Preferably the deflector includes an inner depending skirt, radially smaller than the feed tube such that when the foldable pour spout is in the folded position, the inner depending skirt locates inside the feed tube to define a gap therebetween though which fluid can flow.

Foldability of the pour spout means it can be manufactured as part of the measuring chamber but without the limitations imposed were it moulded in its operational position, due to the constraints of moulding. Preferably the foldable pour spout extends from a wall of the measuring chamber. Preferably the foldable pour spout is pivotally connected to a wall of the measuring chamber e.g. by a hinge, preferably a living hinge. Preferably the pour spout is foldable between an extended position in which it extends externally of the measuring chamber, and a folded position, in which it is seated at least partially within the measuring chamber so as to position the pour spout adjacent the pivotal connection (e.g. living hinge). The pour spout preferably comprises an extended wall section, which preferably tapers in height to an apex.

Preferably the lid and pour spout are pivotally connected to the circumferential wall at opposed, and further preferably diametrically opposed, positions. In this way, the pivoting action of the foldable pour spout and the lid overlaps.

In a particularly preferred embodiment, the foldable pour spout includes the deflector and in the folded position, the deflector is positioned over the feedspout. The deflector may be carried by radial arms extending from a circumferential foldable pour spout.

Thus, with the lid and foldable pour spout being pivotable to the measuring chamber, the measured dosing cap assembly can be made as a single piece. For a plastic assembly it can be a single piece moulding with huge cost saving opportunities. The foldable pour spout may be folded towards so as to lie over the measuring chamber e.g. after manufacturer ready for sale. A snap-fit arrangement by e.g. lugs etc may be provided to ensure a tight fitting arrangement which stays in place during sale, transport and use following sale.

Preferably the assembly comprises a mouldable material, which is most preferably polypropylene but may be any suitable mouldable plastic.

The measured dosing cap assembly may be attachable to the squeeze-operated container by any suitable means, such as screw-threads, or snap-fitting.

The fluid preferably is a laundry composition.

The composition is preferably a shear thinning gel-type composition. This facilitates squeeze-actuated (the squeeze compressing the storage chamber) passage of the fluid through communication devices. The viscosity under shear stress may be less than 300 Pa.s, preferably less than 100 Pa.s and more preferably less than 5 Pa.s, even more preferably it is at most 1 Pa.s and most preferably it is at most 0.5 Pa.s.

Shear thinning compositions may comprise a polymer gum, e.g. Xanthan gum or other gum capable of forming stable continuous gum networks which can suspend particles.

Other external structurants e.g. hydrogenated castor oil, micro crystalline cellulose may be used.

Another method useful is to change a non-gelled formulation so as to form an internal structure therein where the structure gives the desired properties to the thus-formed gel-type detergent. The composition may comprise a soap or fatty acid in combination with sodium sulphate and one or more surfactants may be used to form a gelled structure by the formation of lamellar phases.

The composition may comprise a lamellar phase dispersion from a micellar surfactant system, and additionally a structurant for establishing the lamellar phase, whereby said structurant may be a fatty alcohol.

The composition of the invention contains one or more surface active agents (surfactants) selected from the group consisting of anionic, nonionic, cationic, ampholytic and zwitterionic surfactants or mixtures thereof: The preferred surfactant detergents for use in the present invention are mixtures of anionic and nonionic surfactants although it is to be understood that any surfactant may be used alone or in combination with any other surfactant or surfactants. The surfactant should comprise at least 10% by wt. of the composition, e.g., 11 % to 85%, preferably at least 15% to 70% of the total composition, more preferably 16% to 65%; even more preferably 20% to 65%.

### Nonionic Surfactant

Nonionic synthetic organic detergents which can be used with the invention, alone or in combination with other surfactants, are described below.

Nonionic detergents are characterized by the presence of an organic hydrophobic group and an organic hydrophilic group and are typically produced by the condensation of an organic aliphatic or alkyl aromatic hydrophobic compound with ethylene oxide (hydrophilic in nature). Typical suitable nonionic surfactants are those disclosed in U.S. Pat. Nos. 4,316,812 and 3,630,929.

Usually, the nonionic detergents are polyalkoxylated lipophiles wherein the desired hydrophile-lipophile balance is obtained from addition of a hydrophilic poly-lower alkoxy group to a lipophilic moiety. A preferred class of nonionic detergent is the alkoxylated alkanols wherein the alkanol is of 9 to 18 carbon atoms and wherein the number of moles of alkylene oxide (of 2 or 3 carbon atoms) is from 3 to 12. Of such materials it is preferred to employ those wherein the alkanol is a fatty alcohol of 9 to 11 or 12 to 15 carbon atoms and which contain from 5 to 8 or 5 to 9 alkoxy groups per mole.

Exemplary of such compounds are those wherein the alkanol is of 12 to 15 carbon atoms and which contain about 7 ethylene oxide groups per mole, e.g. Neodol ^{™}25-7 and Neodol ^{™}23-6.5, which products are made by Shell Chemical Company, Inc. The former is a condensation product of a mixture of higher fatty alcohols averaging about 12 to 15 carbon atoms, with about 7 moles of ethylene oxide and the latter is a corresponding mixture wherein the carbon atoms content of the higher fatty alcohol is 12 to 13 and the number of ethylene oxide groups present averages about 6.5. The higher alcohols are primary alkanols.

Other useful nonionics are represented the class of nonionics sold under the trademark Plurafac. The Plurafacs are the reaction products of a higher linear alcohol and a mixture of ethylene and propylene oxides, containing a mixed chain of ethylene oxide and propylene oxide, terminated by a hydroxyl group. Examples include C₁₃-C₁₅ fatty alcohol condensed with 6 moles ethylene oxide and 3 moles propylene oxide, C₁₃-C₁₅ fatty alcohol condensed with 7 moles propylene oxide and 4 moles ethylene oxide, C₁₃-C₁₅ fatty alcohol condensed with 5 moles propylene oxide and 10 moles ethylene oxide, or mixtures of any of the above.

Another group of liquid nonionics are commercially available from Shell Chemical Company, Inc. under the Dobanol trademark: Dobanol 91-5 is an ethoxylated C₉-C₁₁ fatty alcohol with an average of 5 moles ethylene oxide and Dobanol 23-7 is an ethoxylated C₁₂-C₁₅ fatty alcohol with an average of 7 moles ethylene oxide per mole of fatty alcohol.

In the compositions of this invention, preferred nonionic surfactants include the C₁₂-C₁₅ primary fatty alcohols with relatively narrow contents of ethylene oxide in the range of from about 7 to 9 moles, and the C₉ to C₁₁ fatty alcohols ethoxylated with about 5-6 moles ethylene oxide.

Another class of nonionic surfactants which can be used in accordance with this invention are glycoside surfactants. Glycoside surfactants suitable for use in accordance with the present invention include those of the formula:

RO-R'O-_{y}(Z)ₓ

wherein R is a monovalent organic radical containing from 6 to 30 (preferably from 8 to 18) carbon atoms; R' is a divalent hydrocarbon radical containing from about 2 to 4 carbons atoms; O is an oxygen atom; y is a number which can have an average value of from 0 to about 12 but which is most preferably zero; Z is a moiety derived from a reducing saccharide containing 5 or 6 carbon atoms; and x is a number having an average value of from 1 to about 10 (preferably from 1.5 to 10).

A particularly preferred group of glycoside surfactants for use in the practice of this invention includes those of the formula above in which R is a monovalent organic radical (linear or branched) containing from 6 to 18 (especially from about 8 to about 18) carbon atoms; y is zero; z is glucose or a moiety derived therefrom; x is a number having an average value of from 1 to about 4 (preferably from about 1 to 4).

Nonionic surfactants particularly useful for this application include, but are not limited to: alcohol ethoxylates (e.g. Neodol 25-9 from Shell Chemical Co.), alkyl phenol ethoxylates (e.g. Tergitol NP-9 from Union Carbide Corp.), alkylpolyglucosides (e.g. Glucapon^{™} 600CS from Henkel Corp.), polyoxyethylenated polyoxypropylene glycols (e.g. Pluronic^{™}L-65 from BASF Corp.), sorbitol esters (e.g. Emsorb^{™} 2515 from Henkel Corp.), polyoxyethylenated sorbitol esters (e.g. Emsorb^{™} 6900 from Henkel Corp.), alkanolamides (e.g. Alkamide^{™} DC212/SE from Rhone-Poulenc Co.), and N-alkypyrrolidones (e.g. Surfadone^{™}LP-100 from ISP Technologies Inc.).

Nonionic surfactant is used in the formulation from about 0% to about 70%, preferably between 5% and 50%, more preferably 10-40% by weight.

Mixtures of two or more of the nonionic surfactants can be used.

### Anionic Surfactant Detergents

Anionic surface active agents which may be used in the present invention are those surface active compounds which contain a long chain hydrocarbon hydrophobic group in their molecular structure and a hydrophilic group, i.e.; water solubilizing group such as sulfonate or sulfate group. The anionic surface active agents include the alkali metal (e.g. sodium and potassium) water soluble higher alkyl benzene sulfonates, alkyl sulfonates, alkyl sulfates and the alkyl polyether sulfates. They may also include fatty acid or fatty acid soaps. The preferred anionic surface active agents are the alkali metal, ammonium or alkanolamide salts of higher alkyl benzene sulfonates and alkali metal, ammonium or alkanolamide salts of higher alkyl sulfonates. Preferred higher alkyl sulfonates are those in which the alkyl groups contain 8 to 26 carbon atoms, preferably 12 to 22 carbon atoms and more preferably 14 to 18 carbon atoms. The alkyl group in the alkyl benzene sulfonate preferably contains 8 to 16 carbon atoms and more preferably 10 to 15 carbon atoms. A particularly preferred alkyl benzene sulfonate is the sodium or potassium dodecyl benzene sulfonate, e.g. sodium linear dodecyl benzene sulfonate. The primary and secondary alkyl sulfonates can be made by reacting long chain alpha-olefins with sulfites or bisulfites, e.g. sodium bisulfite. The alkyl sulfonates can also be made by reacting long chain normal paraffin hydrocarbons with sulfur dioxide and oxygen as described in U.S. Pat. Nos. 2,503,280, 2,507,088, 3,372,188 and 3,260,741 to obtain normal or secondary higher alkyl sulfonates suitable for use as surfactant detergents.

The alkyl substituent is preferably linear, i.e. normal alkyl, however, branched chain alkyl sulfonates can be employed, although they are not as good with respect to biodegradability. The alkane, i.e. alkyl, substituent may be terminally sulfonated or may be joined, for example, to the carbon atom of the chain, i.e. may be a secondary sulfonate. It is understood in the art that the substituent may be joined to any carbon on the alkyl chain. The higher alkyl sulfonates can be used as the alkali metal salts, such as sodium and potassium. The preferred salts are the sodium salts. The preferred alkyl sulfonates are the C₁₀ to C₁₈ primary normal alkyl sodium and potassium sulfonates, with the C₁₀ to C₁₅ primary normal alkyl sulfonate salt being more preferred.

Mixtures of higher alkyl benzene sulfonates and higher alkyl sulfonates can be used as well as mixtures of higher alkyl benzene sulfonates and higher alkyl polyether sulfates.

The alkali metal alkyl benzene sulfonate can be used in an amount of 0 to 70%, preferably 10 to 50% and more preferably 10 to 20% by weight.

The alkali metal sulfonate can be used in admixture with the alkylbenzene sulfonate in an amount of 0 to 70%, preferably 10 to 50% by weight.

Also normal alkyl and branched chain alkyl sulfates (e.g., primary alkyl sulfates) may be used as the anionic component.

The higher alkyl polyether sulfates used in accordance with the present invention can be normal or branched chain alkyl and contain lower alkoxy groups which can contain two or three carbon atoms. The normal higher alkyl polyether sulfates are preferred in that they have a higher degree of biodegradability than the branched chain alkyl and the lower poly alkoxy groups are preferably ethoxy groups.

The preferred higher alkyl poly ethoxy sulfates used in accordance with the present invention are represented by the formula:

R'-O(CH₂CH₂O)ₚ-SO₃M,

where R' is C₈ to C₂₀ alkyl, preferably C₁₀ to C₁₈ and more preferably C₁₂ to C₁₅; P is 2 to 8, preferably 2 to 6, and more preferably 2 to 4; and M is an alkali metal, such as sodium and potassium, or an ammonium cation.

The sodium and potassium salts are preferred.

A preferred higher alkyl poly ethoxylated sulfate is the sodium salt of a triethoxy C₁₂ to C₁₅ alcohol sulfate having the formula:

C₁₂₋₁₅-O-(CH₂CH₂O)₃-SO₃Na

Examples of suitable alkyl ethoxy sulfates that can be used in accordance with the present invention are C₁₂₋₁₅ normal or primary alkyl triethoxy sulfate, sodium salt; n-decyl diethoxy sulfate, sodium salt; C₁₂ primary alkyl diethoxy sulfate, ammonium salt; C₁₂ primary alkyl triethoxy sulfate, sodium salt: C₁₅ primary alkyl tetraethoxy sulfate, sodium salt, mixed C₁₄₋₁₅ normal primary alkyl mixed tri- and tetraethoxy sulfate, sodium salt; stearyl pentaethoxy sulfate, sodium salt; and mixed C₁₀₋₁₈ normal primary alkyl triethoxy sulfate, potassium salt.

The normal alkyl ethoxy sulfates are readily biodegradable and are preferred. The alkyl poly-lower alkoxy sulfates can be used in mixtures with each other and/or in mixtures with the above discussed higher alkyl benzene, alkyl sulfonates, or alkyl sulfates.

The alkali metal higher alkyl poly ethoxy sulfate can be used with the alkylbenzene sulfonate and/or with an alkyl sulfonate or sulfonate, in an amount of 0 to 70%, preferably 10 to 50% and more preferably 10 to 20% by weight of entire composition.

Anionic surfactants particularly useful for this application include, but are not limited to: linear alkyl benzene sulfonates (e.g. Vista™ C-500 from Vista Chemical Co.), alkyl sulfates (e.g. Polystep^{™} B-5 from Stepan Co.), polyoxyethylenated alkyl sulfates (e.g. Standapol^{™} ES-3 from Stepan Co.), alpha olefin sulfonates (e.g. Witconate^{™} AOS from Witco Corp.), alpha sulfo methyl esters (e.g. Alpha-Step^{™} MC-48 from Stepan Co.) and isethionates (e.g. Jordapon^{™} Cl from PPG Industries Inc.).

Anionic surfactant is used in the formulation from about 0% to about 60%, preferably between 5% and 40%, more preferably 8 to 25% by weight.

The composition may comprise a cationic surfactant. Almost any cationic surfactant having at least one long chain alkyl group of about 10 to 24 carbon atoms is suitable in the present invention. Such compounds are described in "Cationic Surfactants", Jungermann, 1970, are suitable.

Specific cationic surfactants which can be used as surfactants in the subject invention are described in detail in U.S. Pat. No.4,497,718.

As with the nonionic and anionic surfactants, the compositions of the invention may use cationic surfactants alone or in combination with any of the other surfactants known in the art. Of course, the compositions may contain no cationic surfactants at all.

The composition may comprise an ampholytic synthetic detergent, which can be broadly described as derivatives of aliphatic or aliphatic derivatives of heterocyclic secondary and tertiary amines in which the aliphatic radical may be a straight chain or a branched and wherein one of the aliphatic substituents contains from about 8 to 18 carbon atoms and at least one contains an anionic water-solubilizing group, e.g. carboxy, sulfonate, sulfate.

The composition may comprise examples of compounds falling within this definition are sodium 3(dodecylamino)propionate, sodium 3-(dodecylamino)propane-l-sulfonate, sodium 2-(dodecylamino)ethyl sulfate, sodium 2-(dimethylamino)octadecanoate, disodium 3-(N-carboxymethyldodecylamino)propane 1-sulfonate, disodium octadecyl-imminodiacetate, sodium 1-carboxymethyl-2-undecylimidazole, and sodium N,N-bis(2-hydroxyethyl)-2-sulfato-3-dodecoxypropylamine. Sodium 3-(dodecylamino)propane-l-sulfonate is preferred.

The laundry composition may comprise zwitterionic surfactants which can be broadly described as derivatives of secondary and tertiary amines, derivatives of heterocyclic secondary and tertiary amines, or derivatives of quaternary ammonium, quaternary phosphonium or tertiary sulfonium compounds. The cationic atom in the quaternary compound can be part of a heterocyclic ring. In all of these compounds there is at least one aliphatic group, straight chain or branched, containing from about 3 to 18 carbon atoms and at least one aliphatic substituent containing an anionic water solubilizing group, e.g., carboxy, sulfonate, sulfate, phosphate, or phosphonate.

Specific examples of zwitterionic surfactants which may be used are set forth in U.S. Pat. No. 4,062,647.

The amount of amphoteric used may vary from 0 to 50% by weight, preferably 1 to 30% by weight.

It should be noted that the compositions of the invention are preferably isotropic (by which is generally understood to be a homogenous phase when viewed macroscopically) and may be either transparent or translucent.

Total surfactant used must be at least 10%, preferably at least 15%, more preferably at least 20% by wt.

### Builders/Electrolyte

Builders which can be used according to this invention include conventional alkaline detergency builders, inorganic or organic, which can be used at levels from about 0% to about 50% by weight of the composition, preferably from 3% to about 35% by weight.

As used herein, the term electrolyte means any water-soluble salt.

Preferably the composition comprises at least 1.0% by weight, more preferably at least 5.0% by weight, most preferably at least 10.0% by weight of electrolyte. The electrolyte may also be a detergency builder, such as the inorganic builder sodium tripolyphosphate, or it may be a non-functional electrolyte such as sodium sulfate or chloride. Preferably the inorganic builder comprises all or part of the electrolyte.

The composition may comprise at least 1%, preferably at least 3%, preferably 3% to as much as 50% by weight electrolyte.

The compositions of the invention are capable of suspending particulate solids, although particularly preferred are those systems where such solids are actually in suspension. The solids may be undissolved electrolyte, the same as or different from the electrolyte in solution, the latter being saturated electrolyte. Additionally, or alternatively, they may be materials which are substantially insoluble in water alone. Examples of such substantially insoluble materials are aluminosilicate builders and particles of calcite abrasive.

Examples of suitable inorganic alkaline detergency builders which may be used are water-soluble alkali metal phosphates, polyphosphates, borates, silicates and also carbonates. Specific examples of such salts are sodium and potassium triphosphates, pyrophosphates, orthophosphates, hexametaphosphates, tetraborates, silicates, and carbonates.

Examples of suitable organic alkaline detergency builder salts are: (1) water-soluble amino polycarboxylates, e.g., sodium and potassium ethylenediamine tetraacetates, nitrilotriacetates and N-(2 hydroxyethyl)-nitrilodiacetates; (2) water-soluble salts of phytic acid, e.g., sodium and potassium phytates (see U.S. Pat. No. 2,379,942); (3) water-soluble polyphosphonates, including specifically, sodium, potassium and lithium salts of ethane-1-hydroxy-l,1-diphosphonic acid; sodium, potassium and lithium salts of methylene diphosphonic acid; sodium, potassium and lithium salts of ethylene diphosphonic acid; and sodium, potassium and lithium salts of ethane-l,l,2-triphosphonic acid. Other examples include the alkali metal salts of ethane-2-carboxy-l,l-diphosphonic acid hydroxymethanediphosphonic acid, carboxyldiphosphonic acid, ethane-1-hydroxy-l,l,2-triphosphonic acid, ethane-2-hydroxy-1,l,2-triphosphonic acid, propane-1,1,3,3-tetraphosphonic acid, propane-1,1,2,3-tetraphosphonic acid, and propane-1,2,2,3-tetra-phosphonic acid; (4) water-soluble salts of polycarboxylates polymers and copolymers as described in U.S. Patent No. 3,308,067.

In addition, polycarboxylate builders can be used satisfactorily, including water-soluble salts of mellitic acid, citric acid, and carboxymethyloxysuccinic acid, salts of polymers of itaconic acid and maleic acid, tartrate monosuccinate, tartrate disuccinate and mixtures thereof (TMS/TPS).

Certain zeolites or aluminosilicates can be used. One such aluminosilicate which is useful in the compositions of the invention is an amorphous water-insoluble hydrated compound of the formula Naₓ[(AlO₂)_{y}.SiO₂), wherein x is a number from 1.0 to 1.2 and y is 1, said amorphous material being further characterized by a Mg++ exchange capacity of from about 50 mg eq. CaCO₃/g. and a particle diameter of from 0.01 mm to 5 mm. This ion exchange builder is more fully described in British Patent No. 1,470,250.

A second water-insoluble synthetic aluminosilicate ion exchange material useful herein is crystalline in nature and has the formula Na_{z}[(AlO₂)_{y}(SiO₂)]ₓH₂O, wherein z and y are integers of at least 6; the molar ratio of z to y is in the range from 1.0 to about 0.5, and x is an integer from 15 to 264; said aluminosilicate ion exchange material having a particle size diameter from 0.1 mm to 100 mm; a calcium ion exchange capacity on an anhydrous basis of at test about 200 milligrams equivalent of CaCO₃ hardness per gram; and a calcium exchange rate on an anhydrous basis of at least 2 grains/gallon/minute/gram. These synthetic aluminosilicates are more fully described in British Patent No. 1,429,143.

### Enzymes

Enzymes which may be used in the subject invention are described in greater detail below.

If a lipase is used, the lipolytic enzyme may be either a fungal lipase producible by Humicola lanuginosa and Thermomyces lanuginosus, or a bacterial lipase which show a positive immunological cross-reaction with the antibody of the lipase produced by the microorganism Chromobacter viscosum var. lipolyticum NRRL B-3673. This microorganism has been described in Dutch patent specification 154,269 of Toyo Jozo Kabushiki Kaisha and has been deposited with the Fermentation Research Institute, Agency of Industrial Science and Technology, Ministry of International Trade and Industry, Tokyo, Japan, and added to the permanent collection under nr. KO Hatsu Ken Kin Ki 137 and is available to the public at the United States Department of Agriculture, Agricultural Research Service, Northern Utilization and Development Division at Peoria, III., USA, under the nr. NRRL B-3673. The lipase produced by this microorganism is commercially available from Toyo Jozo Co., Tagata, Japan, hereafter referred to as "TJ lipase". These bacterial lipases should show a positive immunological cross-reaction with the TJ lipase antibody, using the standard and well-known immune diffusion procedure according to Ouchterlony (Acta. Med. Scan., 133. pages 76-79 (1930).

The preparation of the antiserum is carried out as follows:
Equal volumes of 0.1 mg/ml antigen and of Freund's adjuvant (complete or incomplete) are mixed until an emulsion is obtained. Two female rabbits are injected 45 with 2 ml samples of the emulsion according to the following scheme:
   day 0: antigen in complete Freund's adjuvant
   day 4: antigen in complete Freund's adjuvant
   day 32: antigen in incomplete Freund's adjuvant
   day 64: booster of antigen in incomplete Freund's adjuvant

The serum containing the required antibody is prepared by centrifugation of clotted blood, taken on day 67.

The titre of the anti-TJ-lipase antiserum is determined by the inspection of precipitation of serial dilutions of antigen and antiserum according to the Ouchteriony procedure. A dilution of antiserum was the dilution that still gave a visible precipitation with an antigen concentration of 0.1 mg/ml.

All bacterial lipases showing a positive immunological cross reaction with the TJ-lipase antibody as hereabove described are lipases suitable in this embodiment of the invention. Typical examples thereof are the lipase ex Pseudomonas fluorescens IAM 1057 (available from Amano Pharmaceutical Co., Nagoya, Japan, under the trade-name Amano-P lipase), the lipase ex Pseudomonas fragi FERM P 1339 (available under the trade-name Amano B), the lipase ex Pseudomonas nitroreducens var. lipolyticum FERM P1338, the lipase ex Pseudomonas sp. (available under the trade-name Amano CES), the lipase ex Pseudomonas cepacia, lipases ex Chromobacter viscosum, e.g. Chromobacter viscosum var. lipolyticum NRRL B-3673, commercially available from Toyo Jozo Co., Tagata, Japan; and further Chromobacter viscosum lipases from U.S. Biochemical Corp. USA and Diosynth Co., The Netherlands, and lipases ex Pseudomonas gladioli.

An example of a fungal lipase as defined above is the lipase ex Humicola lanuginosa available from Amano under the tradename Amano CE; the lipase ex Humicola lanuginosa as described in the aforesaid European Patent Application 0,258,068 (NOVO), as well as the lipase obtained by cloning the gene from Humicola lanuginosa and expressing this gene in Aspergillus oryzae, commercially available from NOVO industri A/S under the tradename "Lipolase". This lipolase is a preferred lipase for use in the present invention.

While various specific lipase enzymes have been described above, it is to be understood that any lipase which can confer the desired lipolytic activity to the composition may be used and the invention is not intended to be limited in any way by specific choice of lipase enzyme.

The lipases of this embodiment of the invention are included in the liquid detergent composition in such an amount that the final composition has a lipolytic enzyme activity of from 100 to 0.005 LU/ml in the wash cycle, preferably 25 to 0.05 LU/ml when the formulation is dosed at a level of about 0.1-10, more preferably 0.5-7, most preferably 1-2 g/liter.

A Lipase Unit (LU) is that amount of lipase which produces 1/mmol of titratable fatty acid per minute in a pH state under the following conditions: temperature 30°C.; pH =9.0; substrate is an emulsion of 3.3 wt. % of olive oil and 3,3% gum arabic, in the presence of 13 mmol/l Ca²⁺ and 20 mmol/l NaCl in 5 mmol/l Trisbuffer.

Naturally, mixtures of the above lipases can be used. The lipases can be used in their non-purified form or in a purified form, e.g. purified with the aid of well-known absorption methods, such as phenyl sepharose absorption techniques.

If a protease is used, the proteolytic enzyme can be of vegetable, animal or microorganism origin. Preferably, it is of the latter origin, which includes yeasts, fungi, molds and bacteria. Particularly preferred are bacterial subtilisin type proteases, obtained from e.g. particular strains of B. subtilis and B licheniformis. Examples of suitable commercially available proteases are Alcalase^{™}, Savinase^{™}, Esperase^{™}, all of NOVO Industri A/S; Maxatase^{™} and Maxacal^{™} of Gist-Brocades; Kazusase^{™} of Showa Denko; BPN and BPN' proteases and so on. The amount of proteolytic enzyme, included in the composition, ranges from 0.05-50,000 GU/mg. preferably 0.1 to 50 GU/mg, based on the final composition. Naturally, mixtures of different proteolytic enzymes may be used.

While various specific enzymes have been described above, it is to be understood that any protease which can confer the desired proteolytic activity to the composition may be used and this embodiment of the invention is not limited in any way be specific choice of proteolytic enzyme.

In addition to lipases or proteases, it is to be understood that other enzymes such as cellulases, oxidases, amylases, peroxidases and the like which are well known in the art may also be used with the composition of the invention. The enzymes may be used together with cofactors required to promote enzyme activity, i.e., they may be used in enzyme systems, if required. It should also be understood that enzymes having mutations at various positions (e.g., enzymes engineered for performance and/or stability enhancement) are also contemplated by the invention. One example of an engineered commercially available enzyme is Durazym from Novo.

The formulation may be enzyme free i.e. 0% by weight of enzymes.

### Optional Ingredients

In addition to the enzymes mentioned above, a number of other optional ingredients may be used.

Alkalinity buffers which may be added to the compositions of the invention include monoethanolamine, triethanolamine, borax, sodium silicate and the like.

Hydrotropes which may be added to the invention include ethanol, sodium xylene sulfonate, sodium cumene sulfonate and the like.

Other materials such as clays, particularly of the water-insoluble types, may be useful adjuncts in compositions of this invention. Particularly useful is bentonite. This material is primarily montmorillonite which is a hydrated aluminum silicate in which about 1/6th of the aluminum atoms may be replaced by magnesium atoms and with which varying amounts of hydrogen, sodium, potassium, calcium, etc. may be loosely combined. Preferably the bentonite is in its more purified form (i.e. free from any grit, sand, etc.) and contains at least 30% montmorillonite. At this level, its cation exchange capacity is at least about 50 to 75 meg per 100g of bentonite. Particularly preferred bentonites are the Wyoming or Western U.S. bentonites which have been sold as Thixo-jels 1, 2, 3 and 4 by Georgia Kaolin Co. These bentonites are known to soften textiles as described in British Patent No. 401,413 to Marriott and British Patent No. 461,221 to Marriott and Guam.

In addition, various other detergent additives of adjuvants may be present in the detergent product to give it additional desired properties, either of functional or aesthetic nature.

Improvements in the physical stability and anti-settling properties of the composition may be achieved by the addition of a small effective amount of an aluminum salt of a higher fatty acid, e.g., aluminum stearate, to the composition. The aluminum stearate stabilizing agent can be added in an amount of 0 to 3%, preferably 0.1 to 2.0% and more preferably 0.5 to l.5%.

There also may be included in the formulation, minor amounts of soil suspending or anti-redeposition agents, e.g. polyvinyl alcohol, fatty amides, sodium carboxymethyl cellulose, hydroxy-propyl methyl cellulose. A preferred anti-redeposition agent is sodium carboxylmethyl cellulose having a 2:1 ratio of CM/MC which is sold under the tradename Relatin DM 4050.

Another minor ingredient is soil releasing agents, e.g. deflocculating polymers. In general, a deflocculating polymer comprises a hydrophilic backbone and one or more hydrophobic side chains.

The deflocculating polymer of the invention is described in greater detail in U.S. Pat. No. 5,147,576.

The deflocculating polymer generally will comprise, when used, from 0.1 to 5% of the composition, preferably 0.1 to 2% and most preferably, 0.5 to 1.5%.

Optical brighteners for cotton, polyamide and polyester fabrics can be used. Suitable optical brighteners include Tinopal^{™} stilbene, triazole and benzidine sulfone compositions, especially sulfonated substituted triazinyl stilbene, sulfonated naphthotriazole stilbene, benzidene sulfone, etc., most preferred are stilbene and triazole combinations. A preferred brightener is Stilbene Brightener N4 which is a dimorpholine dianilino stilbene sulfonate.

Anti-foam agents, e.g. silicone compounds, such as Silicane L 7604, can also be added in small effective amounts.

Bactericides, e.g. tetrachlorosalicylanilide and hexachlorophene, fungicides, dyes, pigments (water dispersible), preservatives, e.g. formalin, ultraviolet absorbers, anti-yellowing agents, such as sodium carboxymethyl cellulose, pH modifiers and pH buffers, color safe bleaches, perfume and dyes and bluing agents such as Iragon Blue L2D, Detergent Blue 472/372 and ultramarine blue can be used.

Also, soil release polymers and cationic softening agents may be used.

The list of optional ingredients above is not intended to be exhaustive and other optional ingredients which may not be listed, but are well known in the art, may also be included in the composition.

Optionally, the inventive compositions may contain all or some the following ingredients: zwitterionic surfactants (e.g. Mirataine^{™} BET C-30 from Rhone-Poulenc Co.), cationic surfactants (e.g. Schercamox^{™} DML from Scher Chemicals, Inc.), fluorescent dye, antiredeposition polymers, antidye transfer polymers, soil release polymers, protease enzymes, lipase enzymes, amylase enzymes, cellulase enzymes, peroxidase enzymes, enzyme stabilizers, perfume, opacifiers, UV absorbers, builders, and suspended particles of size range 300-5000 microns.

Non limiting embodiments are described below by way of example only.
FIG. 1. is an enlarged perspective view of one embodiment of the assembly according to the second aspect of the invention; and
FIG. 2 is an enlarged perspective view of the embodiment of fig 1, showing the folding of the foldable pour spout.
FIGs. 3a.3b.3c show the assembly of fig 1 on a container according to a first aspect of the invention, in use.

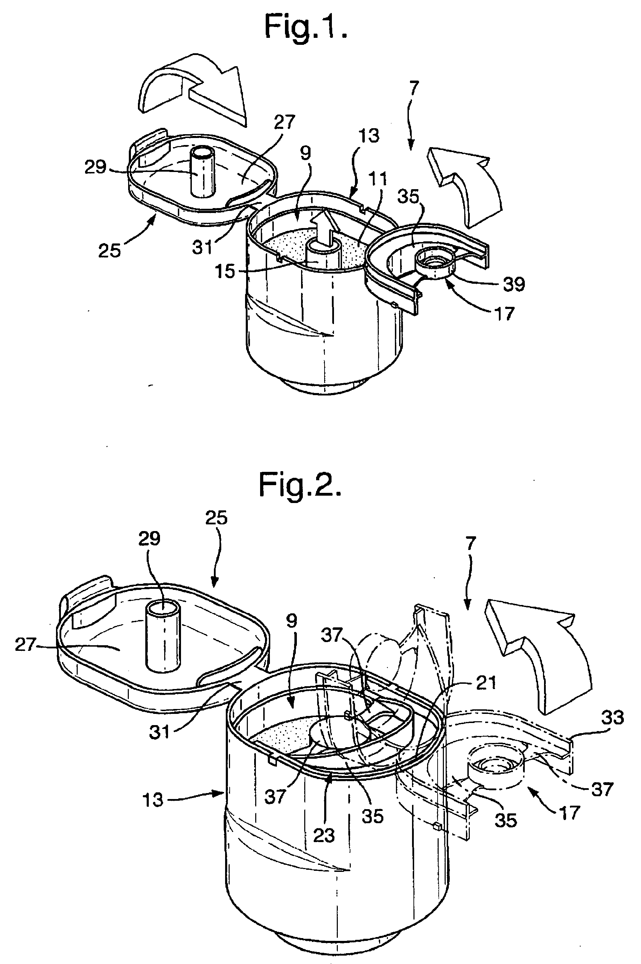

Referring to figure 1 a measured dosing cap assembly 7 is shown, comprising:
(a) a measuring chamber 9 defined by a base 11 and circumferential wall 13
(b) a feed spout 15 which extends upwardly from a base 11 of the measuring chamber 9;
(c) a deflector 17 which overlies the top of the feedspout 15 with a gap (not shown) defined therebetween.

The deflector is carried on a foldable pour spout 33 and spout portion 35. The foldable pour spout 33 is pivotally connected to an upper edge 23 of the circumferential wall 13 via a living hinge 21. Foldable pour spout 33 is foldable at least initially, between an extended position in which is extends externally of the measuring chamber, and a folded position, in which it is seated at least partially within the chamber to position the spout 35 adjacent the measuring chamber circumferential wall 13. The pour spout 35 comprises an extended wall section, which preferably tapers in height to an apex to provide the spout.

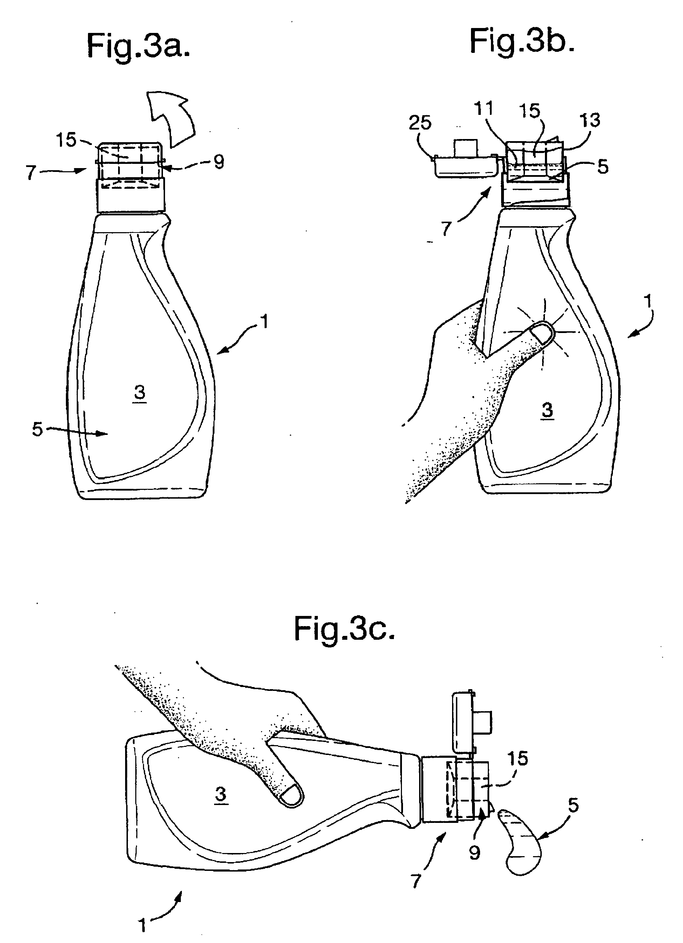

FIG 3 shows a squeeze-operated container 1 with a storage chamber 3 containing laundry fluid (not seen inside chamber 3, but visible at dispensing 5) and the measured dosing cap assembly 7 of Fig 1 installed.

The storage container 1 is squeezable (seen more clearly in fig 3b) to force the laundry fluid 5 from the storage chamber 3 into the measuring chamber 9 for pouring therefrom. Due to the deflector 15, when the laundry fluid squeezed from the storage chamber 3 into the measuring chamber 9, it exits the feedspout laterally and downwardly via the gap, and fills the measuring chamber 9. The measuring chamber 9 is then emptied by pouring as required e.g. into the drawer of a washing machine, or into the drum or dispensing device or bucket etc.

Measured dosing cap assembly 7 includes a lid 25 having a planar body portion 27 which in the closed position overlies the measuring chamber (see fig 3a). Preferably this includes an elongate sealing member 29 extending from the planar body portion which, when the lid 25 is in the closed position, abuts the deflector 17 to sealingly force this against the feed spout 15. Preferably the deflector 17 is resilient such that removal of the force allows the deflector 17 to move away from the feed spout 15 and create the gap which allows fluid communication between storage chamber 3 and measuring chamber 9. Preferably the lid 25 extends pivotally from the circumferential wall 13 of the measuring chamber 9 by e.g. a living hinge 31 and is pivotable between an open and closed position. The living hinge 31 diametrically opposed to hinge 21.

With the arrangement of the invention, when the fluid is forced into the measuring chamber by squeezing the storage chamber 3, the deflector cap 17 prevents or reduces vertical spray of the fluid which can be occasioned by excessive force applied to the storage chamber 3. Excessive force is often used with laundry liquid dispensing as consumers are frequently rushing to complete this task. However with laundry liquids, especially concentrated ones, vertical spray would be highly undesirable.

The assembly comprises a mouldable material, here polypropylene but may be any suitable mouldable plastic. With the lid and foldable pour spout being designed as pivotably connected to the measuring chamber, the measured dosing cap assembly can be moulded as a single piece offering huge cost savings.

The measured dosing cap assembly is attachable to the squeeze-operated container by any suitable means, such as screw-threads, or snap-fitting.

The deflector 17 comprises a circular planar portion attached to the foldable pour spout by radial arms 37 such that when the foldable pour spout is in the folded postion, the deflector 17 is located directly over the feedspout. The deflector includes depending skirt 39 which, when the foldable pour spout is in a folded position, extends downwardly and forms a form of canopy over the feedspout to force the fluid exiting the gap downward.

The deflector 17 further includes a second, inner depending skirt, radially smaller than the feed spout 15 such that when the foldable pour spout is in the folded position, the inner depending skirt locates inside the feed tube to define a gap therebetween though which fluid can flow.

The fluid 5 comprises the composition of table 1 below.

**Table 1. Exemplary Transparent Detergent Formulation**

| **Ingredient as 100% active** | **Wt %** |
|---|---|
| Neodol 25-9* | 6-8 |
| Alcohol ethoxy sulfate | 12-15 |
| Linear alkylbenzene sulfonate | 6-9 |
| Sodium citrate, dehydrate | 3-6 |
| Propylene glycol | 4-8 |
| Sorbitol | 3-6 |
| Sodium tetraborate pentahydrate | 2-4 |
| Minor additives and water | to 100% |

| | |
|---|---|
| *C₁₂-C₁₅ alkoxylated (9EO) chain group | |

It is of course to be understood that the invention is not intended to be restricted to the details of the above embodiments which are described by way of example only.

## Claims

1. A measured dosing cap assembly (7) suitable for use with a squeeze-operated container comprising a storage chamber (3) containing a fluid, the measured dosing cap assembly comprising:
(a) a measuring chamber (9) defined by a base (11) and circumferential wall (13)
(b) a feed spout (15) which extends upwardly from a base of the measuring chamber;
(c) a deflector (17) which extends from at least one position on the periphery of the measuring chamber to overlie the top of the feedspout with a gap defined therebetween, such that the fluid can exit the feedspout laterally via said gap;
**characterised in that** the assembly includes a foldable pour spout (33).

2. A measured dosing cap assembly (7) according to claim 1 wherein the deflector (17) comprises a depending skirt (39) which extends downwardly and forms a canopy over the feed spout.

3. A measured dosing cap assembly (7) according to claim 2 wherein the foldable pour spout (33) is pivotally connected to the assembly between an extended position in which it extends externally of the measuring chamber, and a folded position, in which it is seated at least partially within the measuring chamber (9) so as to position the pour spout adjacent the pivotal connection.

4. A measured dosing cap assembly (7) according to any of claims 2 or 3 in which the foldable pour spout (33) includes the deflector (17).

5. A measured dosing cap assembly (7) according to any preceding claim, comprising a single piece plastic assembly.

6. A method of manufacturing the measured dosing cap assembly (7) according to any of claims 1 - 5 comprising the step of moulding the assembly as a single item.

7. A squeeze-operated container (1) comprising a storage chamber (3) containing a fluid and a measured dosing cap assembly (7)according to any of the claims 1-5 **characterised in that** the measuring chamber (9) is in fluid communication with the / storage chamber (3) via the feed spout (15) of the assembly; the storage container (1) being squeezable to force the fluid from the storage chamber (3) into the measuring chamber (9) via the gap on the feed spout, for pouring from the measuring chamber (9).

8. A squeeze-operated container (1) according to claim 7, **characterised in that** the fluid is a laundry composition.

## Patentansprüche

1. Kappenanordnung für Messdosierungen (7), die für die Verwendung mit einem durch Drücken zu betätigenden Behälter, der eine Flüssigkeit enthaltende Aufbewahrungskammer (3) umfasst, geeignet ist, wobei die Kappenanordnung für Messdosierungen Folgendes umfasst:
(a) eine Messkammer (9), die durch einen Boden (11) und eine umlaufende Wand (13) definiert ist;
(b) eine Zuführtülle (15), die sich von einem Boden der Messkammer nach oben erstreckt;
(c) einen Deflektor (17), der sich von mindestens einer Position auf dem Rand der Messkammer erstreckt, um über der Spitze der Zuführtülle zu liegen, wobei dazwischen ein Spalt definiert ist, so dass die Flüssigkeit seitlich durch den Spalt aus der Zuführtülle austreten kann;
**dadurch gekennzeichnet, dass** die Anordnung eine klappbare Ausgießtülle (33) umfasst.

2. Kappenanordnung für Messdosierungen (7) nach Anspruch 1, wobei der Deflektor (17) eine herabhängende Schürze (39) umfasst, die sich nach unten erstreckt und eine Kappe über der Zuführtülle bildet.

3. Kappenanordnung für Messdosierungen (7) nach Anspruch 2, wobei die klappbare Ausgießtülle (33) mit der Anordnung schwenkbar zwischen einer ausgeklappten Position, in der sie sich aus der Messkammer erstreckt, und einer eingeklappten Position, in der sie sich zumindest teilweise innerhalb der Messkammer (9) befindet, um die Ausgießtülle neben der schwenkbaren Verbindung zu positionieren, verbunden ist.

4. Kappenanordnung für Messdosierungen (7) nach einem der Ansprüche 2 oder 3, in der die klappbare Ausgießtülle (33) den Deflektor (17) umfasst.

5. Kappenanordnung für Messdosierungen (7) nach einem der vorhergehenden Ansprüche, die eine einteilige Kunststoffanordnung umfasst.

6. Verfahren für die Herstellung der Kappenanordnung für Messdosierungen (7) nach einem der Ansprüche 1-5, das den Schritt des Formens der Anordnung als einen einzigen Gegenstand umfasst.

7. Durch Drücken zu betätigender Behälter (1), der eine Flüssigkeit enthaltende Aufbewahrungskammer (3) und eine Kappenanordnung für Messdosierungen (7) nach einem der Ansprüche 1-5 umfasst, **dadurch gekennzeichnet, dass** sich die Messkammer (9) durch die Zuführtülle (15) der Anordnung in fluidtechnischer Kommunikation mit der Aufbewahrungskammer (3) befindet; wobei der Aufbewahrungsbehälter (1) gedrückt werden kann, um die Flüssigkeit durch den Spalt an der Zuführtülle von der Aufbewahrungskammer (3) in die Messkammer (9) zu drängen, um sie aus der Messkammer (9) auszugießen.

8. Durch Drücken zu betätigender Behälter (1) nach Anspruch 7, **dadurch gekennzeichnet, dass** die Flüssigkeit eine Waschzusammensetzung ist.

## Revendications

1. Assemblage de bouchon de dosage mesuré (7) utilisable avec un récipient actionné par pression comprenant une chambre de stockage (3) contenant un fluide, l'assemblage de bouchon de dosage mesuré comprenant :
(a) une chambre de mesure (9) définie par une base (11) et une paroi circonférentielle (13)
(b) un bec d'alimentation (15) qui s'étend vers le haut à partir d'une base de la chambre de mesure ;
(c) un déflecteur (17) qui s'étend d'au moins une position sur la périphérie de la chambre de mesure pour recouvrir le haut du bec d'alimentation avec un espace défini entre ceux-ci, de sorte que le fluide peut sortir du bec d'alimentation latéralement via ledit espace ; **caractérisé en ce que** l'assemblage comprend un bec verseur pliable (33).

2. Assemblage de bouchon de dosage mesuré (7) selon la revendication 1, dans lequel le déflecteur (17) comprend une collerette dépendante (39) qui s'étend vers le bas et forme un capot sur le bec d'alimentation.

3. Assemblage de bouchon de dosage mesuré (7) selon la revendication 2, dans lequel le bec verseur pliable (33) est connecté en pouvant pivoter à l'assemblage entre une position étendue dans laquelle il s'étend vers l'extérieur de la chambre de mesure, et une position pliée, dans laquelle il est situé au moins partiellement dans la chambre de mesure (9) afin de positionner le bec verseur à côté de la connexion qui pivote.

4. Assemblage de bouchon de dosage mesuré (7) selon l'une quelconque des revendications 2 ou 3, dans lequel le bec verseur pliable (33) comprend le déflecteur (17).

5. Assemblage de bouchon de dosage mesuré (7) selon l'une quelconque des revendications précédentes, comprenant un assemblage en matière plastique en une seule pièce.

6. Procédé de fabrication de l'assemblage de bouchon de dosage mesuré (7) selon l'une quelconque des revendications 1-5 comprenant l'étape de moulage de l'assemblage comme un seul article.

7. Récipient actionné par pression (1) comprenant une chambre de stockage (3) contenant un fluide et un assemblage de bouchon de dosage mesuré (7) selon l'une quelconque des revendications 1-5 **caractérisé en ce que** la chambre de mesure (9) est en communication fluide avec la chambre de stockage (3) via le bec d'alimentation (15) de l'assemblage ; le récipient de stockage (1) pouvant être pressé pour forcer le fluide de la chambre de stockage (3) dans la chambre de mesure (9) via l'espace sur le bec d'alimentation, pour verser à partir de la chambre de mesure (9).

8. Récipient actionné par pression (1) selon la revendication 7, **caractérisé en ce que** le fluide est une composition de lessive.
